# EUROPEAN PATENT APPLICATION

(11) **EP 2 660 704 A2**
(43) Date of publication of application: **06.11.2013**
(21) Application number: 13166483.1
(22) Date of filing: 03.05.2013
(51) Int. Cl.: G06F 3/0488

(54) **Virtual keyboard for inputting supplementary character and supplementary character inputting apparatus and method using the virtual keyboard**

(30) Priority: 03.05.2012 KR 20120047039
(71) Applicant: Samsung Electronics Co., Ltd, Gyeonggi-do 443-742 (KR)
(72) Inventor: Choi, Yun-Jeong, 443-742 Gyeonggi-do (KR); Baek, Jong-Wu, 443-742 Gyeonggi-do (KR); Oh, Seung-Ah, 443-742 Gyeonggi-do (KR); Jeong, Hye-Soon, 443-742 Gyeonggi-do (KR)
(74) Representative: Birchenough, Lewis

(57) **Abstract**

A virtual keyboard, an apparatus, and method using the virtual keyboard provide supplementary character input. The virtual keyboard includes basic character keys which correspond to basic characters of a basic character set corresponding to a currently set input language, respectively, and at least one character function keys. If the character function key is input, basic character keys corresponding to basic characters to which supplementary characters of at least one supplementary character sets corresponding to the input language are mapped respectively are switched to supplementary character keys of a supplementary character set which is set to correspond to the input character function key. Virtual key stamps of the corresponding basic characters are displayed on the basic character keys. Virtual key stamps of the corresponding supplementary characters are displayed on the supplementary character keys.

## Description

### TECHNICAL FIELD

The present disclosure relates generally to a virtual keyboard, and more particularly, to a virtual keyboard and an apparatus and method for inputting a supplementary character supported for each language.

### BACKGROUND

Virtual keyboards are displayed on screens of touch screen displays in devices employing the touch screen displays, and are used for input through the screens of the touch screen displays. The touch screen display provides a User Interface (UI) through the screen. The touch screen display displays graphics and texts on the screen, and senses and reacts to a touch on the screen. The device employing the touch screen display may display one or more soft keys and menus and other user interface objects on the screen. A user contacts the screen in a position corresponding to a user interface object for input related to the user interface object to the device employing the touch screen display.

The virtual keyboard may be used on a desktop computer or a smart Television (TV), but is generally adopted in a mobile device. Examples of the mobile device may include mobile terminals such as tablet phones or smart phones as well as laptop computers and tablet computers among Personal Computers (PCs). In particular, mobile terminals having size restrictions generally adopt virtual keyboards.

Mobile devices support various languages. Thus, the mobile device supports different virtual keyboards for different languages. For example, a virtual keyboard for languages using alphabets basically provides a key layout of an English alphabet character set such as a QWERTY keyboard and a supplementary character which needs to be provided for each language is provided in a bubble pop-up. The key layout of the English alphabet character set includes basic character keys corresponding to alphabets of the English alphabet character set. If among the basic character keys of the virtual keyboard, a basic character key corresponding to a basic character which is similar to a supplementary character that should be provided for each language is long pressed, that is, tapped, and then is held for a predetermined time or more, a supplementary character set including supplementary characters mapped to the basic character key is provided in a bubble pop-up.

As such, when a user selects one of supplementary characters provided as a bubble pop-up, the user touch-moves to the desired supplementary character among the supplementary characters provided in the bubble pop-up in a hold state to select and input the supplementary character. The touch-movement means that the user moves a touch point while maintaining a touch on the screen.

The foregoing supplementary character input scheme is difficult for a user who has no previous knowledge of long-press interaction to use. Moreover, the user has to select one of basic characters corresponding to supplementary characters, such that the user cannot intuitively recognize a basic character to which a user desired supplementary character corresponds.

Furthermore, the above-described supplementary character input scheme is quite different from a supplementary character input scheme which uses a PC keyboard provided for each language. As a result, for a tablet phone, when the supplementary character input scheme is used in connection with a keyboard dock, inconvenience and confusion are caused to the user.

### SUMMARY

To address the above-discussed deficiencies of the prior art, it is a primary object to provide a virtual keyboard which allows a user to easily input a supplementary character for each language and a supplementary character inputting apparatus and method using the virtual keyboard.

The present disclosure also provides a virtual keyboard which allows a user to intuitively recognize a supplementary character for each language provided on the virtual keyboard and a supplementary character inputting apparatus and method using the virtual keyboard.

The present disclosure also provides a virtual keyboard which allows a user to input a supplementary character for each language similarly with a supplementary character input scheme using a PC keyboard which is familiar with the user, and a supplementary character inputting apparatus and method using the virtual keyboard.

According to an aspect of the present disclosure, there is provided a virtual keyboard for supplementary character input, the virtual keyboard including basic character keys which correspond to basic characters of a basic character set corresponding to a currently set input language, respectively, and at least one character function keys, in which if the character function key is input, basic character keys corresponding to basic characters to which supplementary characters of at least one supplementary character sets corresponding to the input language are mapped respectively are switched to supplementary character keys of a supplementary character set which is set to correspond to the input character function key, virtual key stamps of the corresponding basic characters are displayed on the basic character keys, and virtual key stamps of the corresponding supplementary characters are displayed on the supplementary character keys.

According to another aspect of the present disclosure, there is provided a supplementary character input apparatus using a virtual keyboard, the supplementary character input apparatus including a display for displaying a virtual keyboard on a screen; and a controller for displaying basic character keys which correspond to basic characters of a basic character set corresponding to a currently set input language, respectively, and on which virtual key stamps of the corresponding basic characters, and at least one character function keys on the virtual keyboard, wherein if the character function key is input, the controller switches basic character keys corresponding to basic characters to which supplementary characters of at least one supplementary character sets corresponding to the input language are mapped respectively into supplementary character keys of a supplementary character set which is set to correspond to the input character function key, and displays virtual key stamps of the corresponding supplementary characters on the supplementary character keys.

According to another aspect of the present disclosure, there is provided a supplementary character input method using a virtual keyboard, the supplementary character input method including displaying a virtual keyboard comprising basic character keys which correspond to basic characters of a basic character set corresponding to a currently set input language, respectively, and on which virtual key stamps of the corresponding basic characters are displayed, and comprising at least one character function keys, switching basic character keys corresponding to basic characters to which supplementary characters of at least one supplementary character sets corresponding to the input language are mapped respectively into supplementary character keys of a supplementary character set which is set to correspond to the character function key, if the character function key is input, and displaying virtual key stamps of the corresponding supplementary characters on the supplementary character keys.

Before undertaking the DETAILED DESCRIPTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

### BRIEF DESCRIPTION OF THE DRAWINGS

For a more complete understanding of the present disclosure and its advantages, reference is now made to the following description taken in conjunction with the accompanying drawings, in which like reference numerals represent like parts:

FIG. 1 illustrates a block diagram of a supplementary character inputting apparatus using a virtual keyboard according to an exemplary embodiment of the present disclosure;

FIGs. 2A through 2E illustrate a virtual keyboard according to one embodiment of the present disclosure;

FIGs. 3A through 3D illustrate a virtual keyboard for another language according to one embodiment of the present disclosure;

FIG. 4 illustrates a flowchart of a process according to one embodiment of the present disclosure;

FIG. 5 illustrates a flowchart of a supplementary character input mode according to an exemplary embodiment of the present disclosure;

FIGs. 6A through 6D illustrate a virtual keyboard according to another embodiment of the present disclosure;

FIGs. 7A and 7B illustrate virtual key stamps of character function keys according to an embodiment of the present disclosure;

FIG. 8 illustrates a flowchart of a process according to an embodiment of the present disclosure;

FIGs. 9A through 9C are illustrate a virtual keyboard according to another embodiment of the present disclosure;

FIG. 10 illustrates a flowchart according to an embodiment of the present disclosure;

FIG. 11 illustrates a virtual keyboard according to another embodiment of the present disclosure; and

FIG. 12 illustrates a flowchart of a process according to an embodiment of the present disclosure.

### DETAILED DESCRIPTION

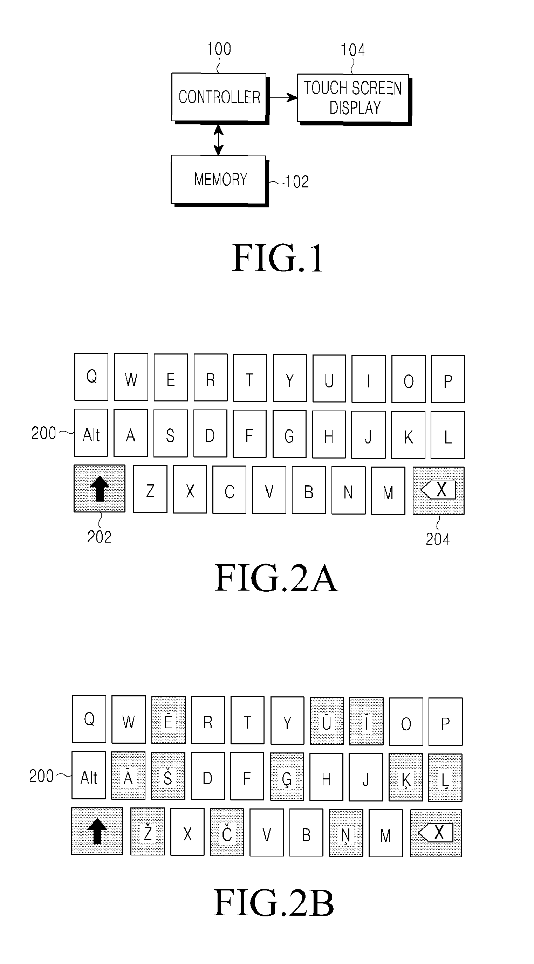

FIGURES 1 through 12, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged system or device. Hereinafter, exemplary embodiments of the present disclosure will be described in detail with reference to the accompanying drawings. The following description using reference numerals in the annexed drawings is intended to facilitate comprehensive understanding of the embodiments of the present disclosure as defined in the claims and equivalents thereof. To help understanding of the embodiments of the present disclosure, various specific details are included, but they should be regarded as being illustrative. Therefore, those of ordinary skill in the art may recognize that various changes and modifications of the embodiments described below may be made without departing the scope and spirit of the present disclosure. Moreover, description of well-known functions or components may be omitted for clarity and brevity.

Terms and words used in the following description and claims are not limited to the bibliographical meanings, but, are merely used by the inventor to enable a clear and consistent understanding of the disclosure. Accordingly, definitions of the terms and words should be made based on all the details of the specification. Throughout the drawings, like reference numerals refer to like components.

In the following description, embodiments of the present disclosure will be described by using, as an example, a virtual keyboard which basically provides a QWERTY keyboard for languages using alphabets, especially, a Latvian language and a Greek language. However, the embodiments of the present disclosure may also be applied to other devices which have a similar technical background. The embodiments of the present disclosure may also be applied to other devices through some modifications which are made by those of ordinary skill in the art without departing from the scope of the present disclosure. That is, the embodiments of the present disclosure may be equally applied to any device which supports input of supplementary characters as well as basic characteristics for an input language through a virtual keyboard.

FIG. 1 illustrates a block diagram illustrating a supplementary character inputting apparatus using a virtual keyboard according to an exemplary embodiment of the present disclosure. In FIG. 1, in a device to which the embodiments of the present disclosure is applied, a structure which is not directly associated with a virtual keyboard is not illustrated. Referring to FIG. 1, a controller 100 may be a processor of a device to which the embodiments of the present disclosure is applied. The controller 100 may be implemented in such a way that the processor of the device to which the embodiments of the present disclosure is applied provides a virtual keyboard according to an embodiment of the present disclosure and performs a supplementary character input function using the virtual keyboard according to an embodiment of the present disclosure.

A memory 102 stores a program for operations of the controller 100 and stores various data corresponding to execution of the controller 100. The memory 102 may be included outside or inside the controller 100. The memory 102 may further include an external memory and a storage device such as a Hard Disk Drive (HDD).

A touch screen display 104 provides an input interface and an output interface as user interfaces between the controller 100 and a user. The touch screen display 104 displays an image corresponding to operations of the controller 100 on a screen and provides a user input corresponding to a contact on the screen to the controller 100. The touch screen display 104 displays a virtual keyboard according to an embodiment of the present disclosure under control of the controller 100 and provides a key input corresponding to a contact on the virtual keyboard to the controller 100.

The controller 100 displays a virtual keyboard including basic character keys and at least one character function keys on the screen of the touch screen display 104. The basic character keys correspond to basic characters of a basic character set corresponding to a currently set input language, respectively. On the basic character keys are displayed virtual key stamps of corresponding basic characters, respectively.

Upon input of a character function key, the controller 100 switches basic character keys corresponding to basic characters to which supplementary characters of at least one supplementary character sets are mapped into supplementary character keys of one supplementary character set which is set to correspond to the character function key. The controller 100 displays a virtual key stamp of a supplementary character corresponding to each supplementary character key on the virtual keyboard. As can be seen from the following embodiments of the present disclosure, there may be one character function key or plural character function keys.

Supplementary characters of a supplementary character set corresponding to an input language may be mapped to basic characters of basic character keys, respectively, in the following manner. For example, in the Latvian language, for capital letters, in addition to English alphabets A through Z, 11 supplementary characters G, K, 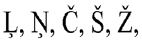 A̅, E̅, I̅, and U̅ may be required. Thus, as shown in Table 1, supplementary character keys corresponding to the supplementary characters 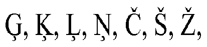 A̅, E̅, I̅, and U̅ are mapped to basic character keys corresponding to English alphabets G, K, L, N, C, S, Z, A, E, I, and U, respectively.

**[Table 1]**

| Basic Character | Supplementary Character |
|---|---|
| A | A̅ |
| C | 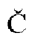 |
| E | E̅ |
| G | 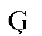 |
| I | I̅ |
| K | 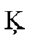 |
| L | 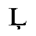 |
| N | 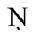 |
| S | 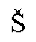 |
| U | U̅ |
| Z | 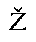 |

Likewise, for small letters, in addition to English alphabets a through z, supplementary character keys corresponding to small letters of the 11 supplementary characters 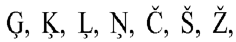 A̅, E̅, I̅, and U̅ are mapped to basic character keys corresponding to English alphabets g, k, l, n, c, s, z, a, e, i, and u, respectively. Mapping between the basic character keys and the supplementary character keys may be stored in the memory 102.

FIGs. 2A through 2E illustrate a virtual keyboard according to one embodiment of the present disclosure. FIGs. 2A through 2E illustrate an example of a virtual keyboard when a currently set input language is the Latvian language.

FIGs. 2A and 2B illustrate a virtual keyboard in a capital letter mode; FIG. 2A corresponds to a basic character input mode and FIG. 2B corresponds to a supplementary character input mode. Typically, when characters corresponding to an input language are divided into capital letters and small letters, a capital letter mode means a mode for inputting capital letters through the virtual keyboard and a small letter mode means a mode for inputting small letters through the virtual keyboard. Herein, the basic character input mode means a mode for inputting basic characters of a basic character set corresponding to a currently set input language through the virtual keyboard. The supplementary character input mode means a mode for inputting supplementary characters of a supplementary character set corresponding to the currently set input language through the virtual keyboard.

Referring to FIG. 2A, the virtual keyboard includes basic character keys of an English alphabet character set which is a basic character set corresponding to the Latvian language which is a currently set input language. Therefore, basic characters of the basic character set are English alphabets A through Z and the basic character keys correspond to the English alphabets A through Z. In FIG. 2A, the English alphabets A through Z are virtual key stamps marked on the corresponding basic character keys. Thus, the keys marked with A through Z are the basic character keys.

The virtual keyboard illustrated in FIG. 2A includes a character function key 200 and also includes a shift key 202 and a delete key 204 which are included in a general virtual keyboard. The shift key 202 is a toggle key which performs switching between a small letter mode and a capital letter mode when being input. The delete key 204 is used to delete an input character. The character function key 200 marked with a virtual key stamp 'Alt' is a key for switching basic character keys to which supplementary character keys of a supplementary character set corresponding to the Latvian language, which is set to correspond to the character function key 200, are mapped into the supplementary character keys.

Upon input of the character function key 200 in the virtual keyboard illustrated in FIG. 2A, basic character keys to which supplementary character keys of a supplementary character set corresponding to the Latvian language are mapped are switched into the supplementary character keys of the supplementary character set which is set to correspond to the character function key 200, as illustrated in FIG. 2B. That is, basic character keys corresponding to the English alphabets G, K, L, N, C, S, Z, A, E, I, and U are switched into supplementary character keys corresponding to the supplementary characters 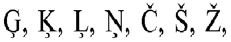 A̅, E̅, I̅, and U̅. On the supplementary character keys are displayed virtual key stamps 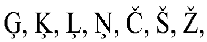 A̅, E̅, I̅, and U̅ of the supplementary characters. Therefore, keys marked with 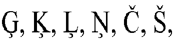 A̅, E̅, I̅, and U̅ are the supplementary character keys.

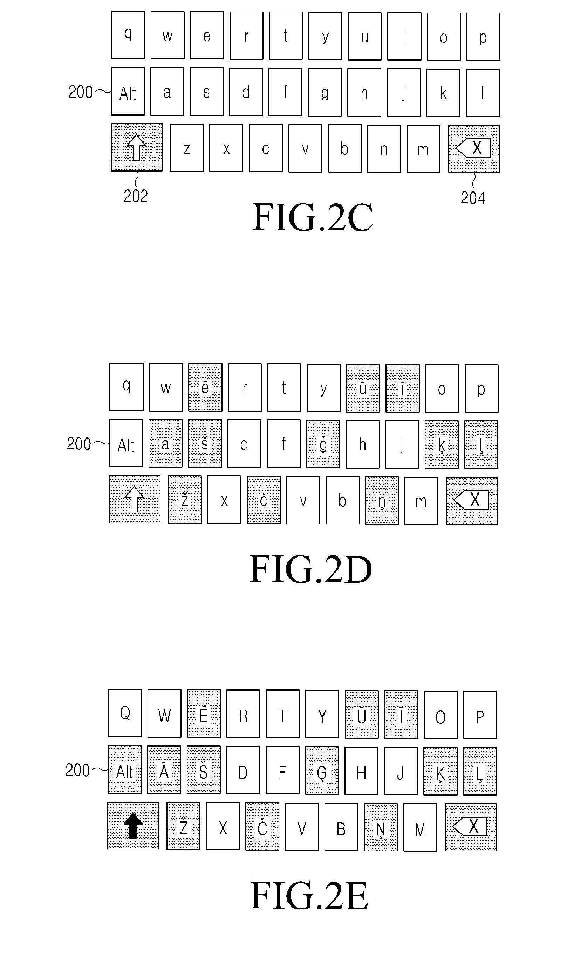

To allow the user to easily distinguish the supplementary character keys from the other basic character keys, shapes of the supplementary character keys are displayed different from those of the basic character keys. In FIG. 2B, as the shapes of the supplementary character keys, the supplementary character keys are shaded. The shapes of the supplementary character keys displayed different from the basic character keys include at least one of a shape of an edge of a corresponding supplementary character key and a letter shape of a virtual key stamp of a corresponding supplementary character key, and a color of all or some of the supplementary keys or a color of an edge of a corresponding supplementary character key. The shape of the character function key 200 may be the same as those of supplementary character keys, that is, the character function key 200 may be shaded as illustrated in FIG. 2E.

When one of the supplementary character keys is input in the supplementary character input mode of FIG. 2B, the virtual keyboard is switched to the basic character input mode of FIG. 2A. That is, the supplementary character keys are switched into the original basic character keys. On the other hand, when the character function key 200 is input in the supplementary character input mode of FIG. 2B, the virtual keyboard may be switched into the basic character input mode of FIG. 2A. In another example, until the character function key 200 is input in the supplementary character input mode of FIG. 2B, the supplementary character input mode may be maintained without being switched into the basic character input mode of FIG. 2A.

FIGs. 2C and 2D illustrate a virtual keyboard corresponding to the Latvian language in the small letter mode; FIG. 2C corresponds to the basic character input mode and FIG. 2D corresponds to the supplementary character input mode. Upon input of the character function key 200 in the virtual keyboard of FIG. 2C, basic character keys corresponding to supplementary character keys among all the basic character keys are switched into the supplementary character keys as illustrated in FIG. 2D. In the small letter mode, operations are performed in the same manner as in the above-described capital letter mode and thus will not be further described in detail.

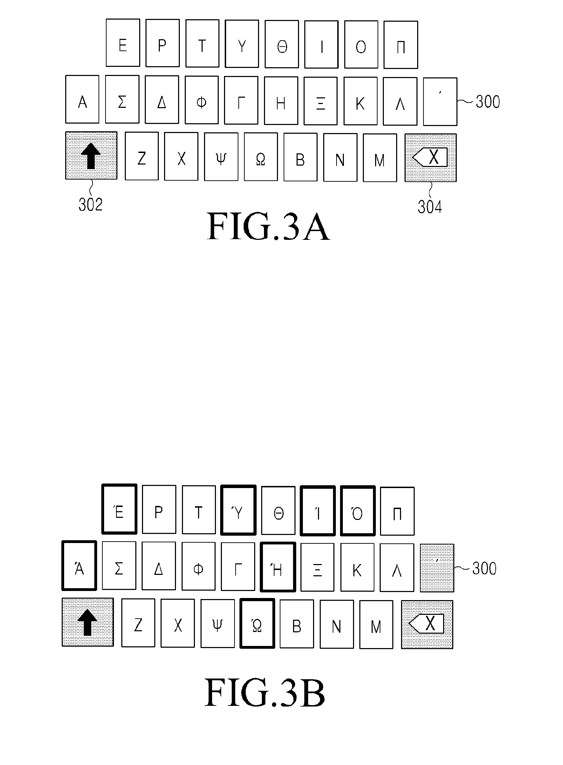

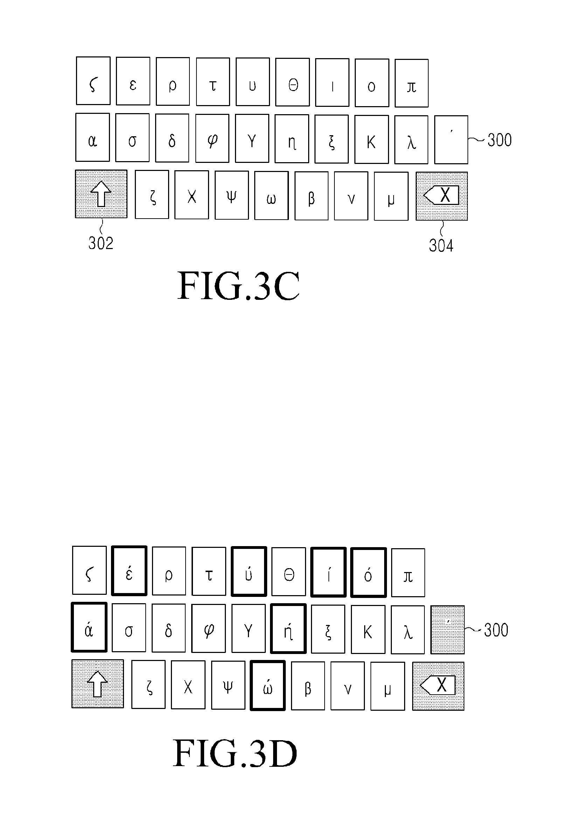

FIGs. 3A through 3D illustrate another virtual keyboard according to one embodiment of the present disclosure. FIGs. 3A through 3D illustrate an example of a virtual keyboard in which a currently set input language is the Greek language and supplementary characters include an acute accent symbol "'. FIGs. 3A and 3B illustrate the virtual keyboard in the capital letter mode and FIGs. 3C and 3D illustrate the virtual keyboard in the small letter mode. FIGs. 3A and 3C correspond to the basic character input mode and FIGs. 3B and 3D correspond to the supplementary character input mode.

The virtual keyboard of FIG. 3A includes a character function key 300 and also includes a shift key 302 and a delete key 304 which are included in a typical virtual keyboard. The character function key 300 marked with a virtual key stamp ''' is a key for switching basic character keys to which supplementary character keys of a supplementary character set corresponding to the Greek language which is set to correspond to the character function key 300 are mapped into the supplementary character keys. The shift key 302 and the delete key 304 have the same functions as those of the shift key 202 and the delete key 204 of FIG. 2A.

For capital letters of the Greek language, for example, in addition to alphabets A through Ω, 7 acute accent characters 'A, 'E, 'H, 'I, 'O, 'Y, and 'Ω may also be required. Thus, as illustrated in FIG. 3B, supplementary character keys corresponding to the supplementary characters A, 'E, 'H, 'I, 'O, 'Y, and 'Ω are mapped to basic character keys corresponding to alphabets A, E, H, I, O, Ω, and Y illustrated in FIG. 3A.

Likewise, for small letters, in addition to alphabets α through ω of the virtual keyboard illustrated in FIG. 3C, supplementary character keys corresponding to small letters of the 7 supplementary characters A, 'E, 'H, 'I, 'O, 'Y, and Ω are mapped to basic character keys corresponding to the alphabets α, ε, η, τ, o, µ, and ω, respectively, as illustrated in FIG. 3D.

Upon input of the character function key 300 in the virtual keyboard of FIG. 3A, then the basic character keys to which supplementary characters of a supplementary character set corresponding to the Greek language are mapped respectively are switched into the supplementary character keys of the supplementary character set which is set to correspond to the character function key 300 as illustrated in FIG. 3B.

To allow the user to easily distinguish supplementary character keys from the other basic character keys, the shapes of the supplementary character keys are displayed different from those of the basic character keys. In FIG. 3B, as an example of the shapes of the supplementary character keys, unlike in FIG. 2B, edge lines of the supplementary character keys are marked with bold lines. The shape of the character function key 300 is different from those of the supplementary character keys as illustrated in FIG. 3B, but the character function key 300 may be shaded to be distinguished from the basic character keys.

In the small letter mode, upon input of the character function key 300 in the virtual keyboard of FIG. 3C, among all the basic character keys, basic character keys corresponding to the supplementary character keys are switched into the supplementary character keys as illustrated in FIG. 3D. In the small letter mode, operations are performed in the same manner as in the above-described capital letter mode and thus will not be further described in detail.

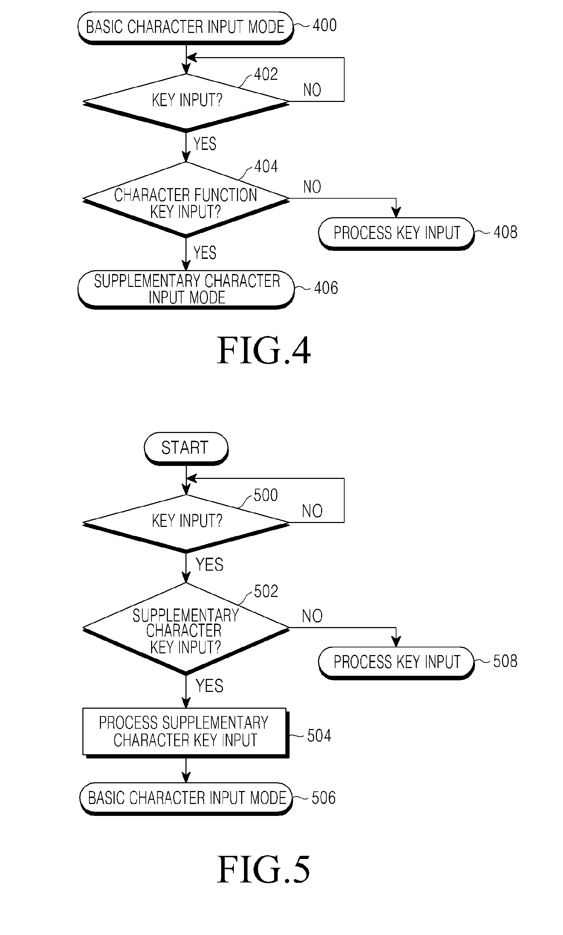

FIG. 4 illustrates a flowchart for a process according to one embodiment of the present disclosure. FIG. 4 illustrates a process performed by the controller 100 of FIG. 1 according to the above-described first embodiment of the present disclosure. Referring to FIG. 4, in the basic character input mode in step 400, the controller 100 displays the virtual keyboard, for example, as illustrated in FIG. 2A, on a screen of the touch screen display 104. In this state, the user may input basic characters through the basic character keys of the virtual keyboard. When desiring to input supplementary characters, the user inputs the character function key 200.

If there is a key input in step 402, the controller 100 determines whether the key input is a character function key input, that is, the character function key 200 is input in step 404. If the key input is not the character function key input, then the controller 100 processes the key input in step 408. On the other hand, if the key input is the character function key input, the controller 100 proceeds to step 406 to switch the basic character input mode to the supplementary character input mode. In the supplementary character input mode, the controller 100 displays the virtual keyboard, for example, as illustrated in FIG. 2B on the screen of the touch screen display 104. In this state, the user may input a desired supplementary character among the supplementary characters 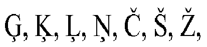 A̅, E̅, I̅, and U̅ through the supplementary character keys of the virtual keyboard.

FIG. 5 illustrates a flowchart of the supplementary character input mode according to an exemplary embodiment of the present disclosure. FIG. 5 illustrates a process of the supplementary character input mode executed by the controller 100 according to the above-described first embodiment of the present disclosure. Referring to FIG. 5, if there is a key input in step 500 when for example, the virtual keyboard of FIG. 2B is displayed, the controller 100 determines whether the key input is a supplementary character key input in step 502. If the key input is not the supplementary character key input, the controller 100 processes the key input in step 508.

On the other hand, if the key input is the supplementary character key input, the controller 100 processes the supplementary character key input in step 504. That is, the controller 100 processes the key input as input of a supplementary character corresponding to an input supplementary character key. The input supplementary character is displayed on an input window on the screen of the touch screen display 104.

As such, after one supplementary character key is input, the controller 100 proceeds to step 506 to switch the supplementary character input mode into the basic character input mode of step 400.

Therefore, if the user inputs the character function key 200 in the basic character input mode, supplementary characters of a supplementary character set are displayed on the virtual keyboard in place of corresponding basic characters. Moreover, the shapes of supplementary character keys are displayed different from those of the other basic character keys, allowing the user to easily recognize the supplementary character keys and thus to easily input supplementary characters for each language. In addition, similarly with a PC keyboard for each language, supplementary character keys to which basic character keys corresponding to supplementary characters are mapped are displayed, such that the user may input a supplementary character for each language in a similar manner to a supplementary character input scheme using a PC keyboard which is familiar to the user.

The supplementary characters 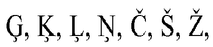 A̅, E̅, I̅, and U̅ may be classified according to symbols included therein. That is, they may be classified into the supplementary characters 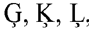 and 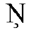 which include ',', the supplementary characters 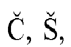 and 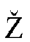 which include 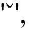 and the supplementary characters A̅, E̅, I̅, and U̅ which include '-'. In this sense, the supplementary characters may be classified into different supplementary character sets according to symbols included in the supplementary characters. In this case, each supplementary character set includes supplementary characters including the same symbol therein.

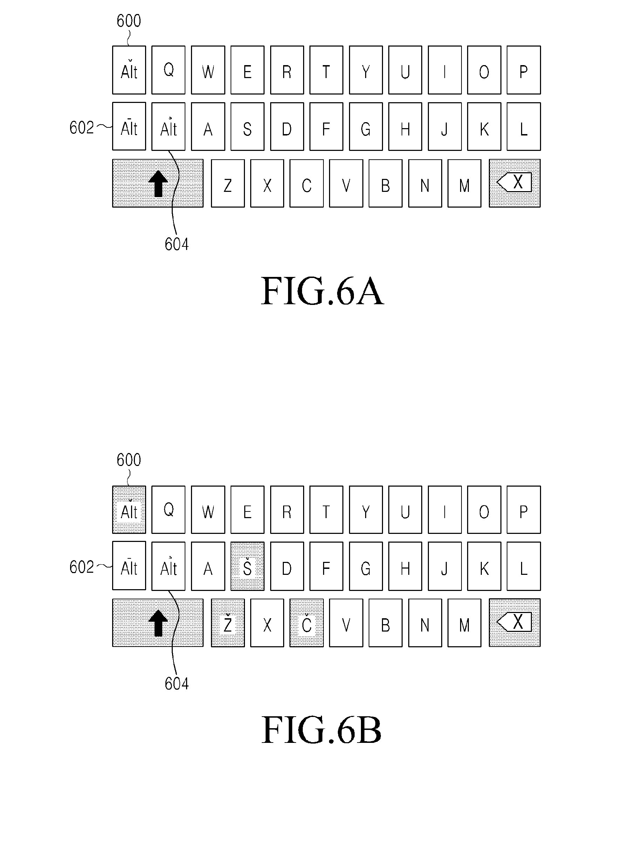

FIGs. 6A through 6D illustrate a virtual keyboard according to another embodiment of the present disclosure, in which as stated above, supplementary characters are classified into different supplementary character sets. FIGs. 6A through 6D illustrate an example of a virtual keyboard when a currently set input language is the Latvian language in the capital letter mode. FIG. 6A illustrates a virtual keyboard in the basic character input mode, and FIGs. 6B through 6D illustrate the virtual keyboard in the supplementary character input mode.

Referring to FIG. 6A, a virtual keyboard includes first through third character function keys 600, 602, and 604. The first character function key 600 is set to correspond to a supplementary character set of the supplementary characters 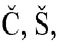 and 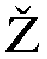 including 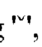 the second character function key 602 is set to correspond to a supplementary character set of the supplementary characters A̅, E̅, I̅, and U̅ including '⁻', and the third character function key 604 is set to correspond to a supplementary character set of the supplementary characters 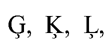 and 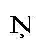 including ','. As illustrated in FIG. 6A, corresponding symbols are included in the respective virtual key stamps 'Alt' of the first through third character function keys 600 through 604, allowing the user to easily recognize the respective supplementary character sets corresponding to the first through third character function keys 600 through 604.

Upon input of the first character function key 600 in the virtual keyboard of FIG. 6A, the basic character input mode is switched into a first supplementary character input mode as illustrated in FIG. 6B. Upon switch to the first supplementary character input mode as illustrated in FIG. 6B, basic character keys of the basic characters C, S, and Z of FIG. 6A corresponding to supplementary characters of a supplementary character set corresponding to the first character function key 600 are switched into supplementary character keys corresponding to the supplementary characters 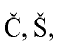 and 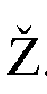 . In this case, the shapes of the supplementary character keys and the shape of the first character function key 600 are displayed different from those of the other basic character keys. In FIG. 6A, the supplementary character keys and the first function key 600 are displayed shaded.

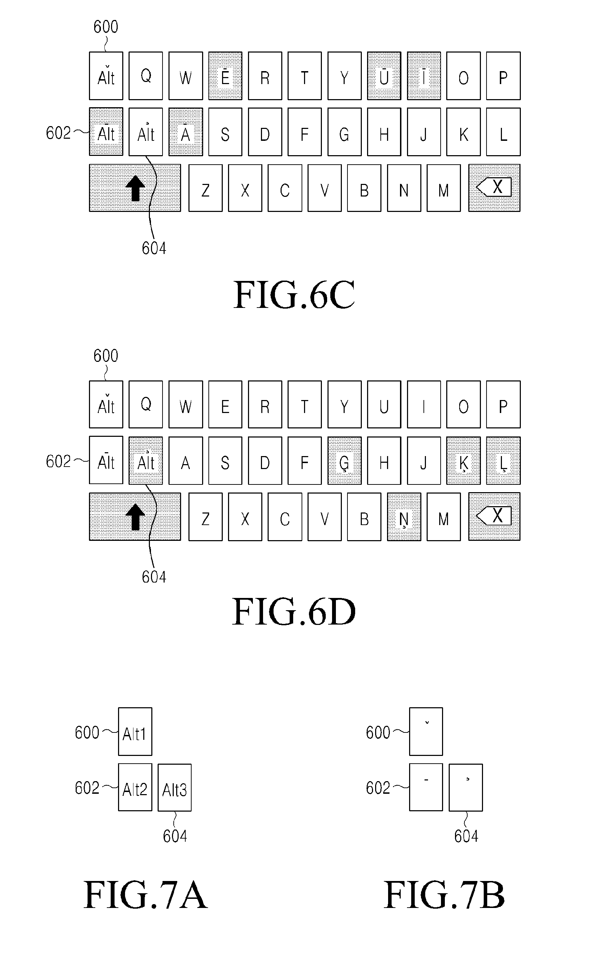

Upon input of the second character function key 602 in the virtual keyboard of FIG. 6A, the basic character input mode is switched into a second supplementary character input mode. Upon switch to the second supplementary character input mode as illustrated in FIG. 6C, basic character keys of the basic characters A, E, I, and U of FIG. 6A corresponding to supplementary characters of a supplementary character set corresponding to the second character function key 602 are switched into supplementary character keys corresponding to the supplementary characters A̅, E̅, I̅, and U̅. In this case, the shapes of the supplementary character keys and the shape of the second character function key 602 are displayed different from those of the other basic character keys. In FIG. 6C, the supplementary character keys and the second character function key 602 are displayed shaded.

Upon input of the third character function key 604 in the virtual keyboard of FIG. 6A, the basic character input mode is switched into a third supplementary character input mode. Upon switch to the third supplementary character input mode as illustrated in FIG. 6D, basic character keys of the basic characters G, K, L, and N of FIG. 6A corresponding to supplementary characters of a supplementary character set corresponding to the third character function key 604 are switched into supplementary character keys corresponding to the supplementary characters 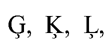 and 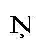 In this case, the shapes of the supplementary character keys and the shape of the third character function key 604 are displayed different from those of the other basic character keys. In FIG. 6D, the supplementary character keys and the third character function key 604 are displayed shaded.

The virtual key stamps of the first through third character function keys 600 through 604 may be displayed different from those illustrated in FIGs. 6A through 6D, as illustrated in FIGs. 7A and 7B.

FIGs. 7A and 7B illustrate virtual key stamps of character function keys according to an embodiment of the present disclosure. The virtual key stamps of the first through third character function keys 600 through 604 illustrated in FIGs. 6A through 6D may be displayed as illustrated in FIG. 7A or FIG. 7B. In FIG. 7A, the virtual key stamps of the first through third character function keys 600 through 604 are displayed as 'Altl', 'Alt2', and'Alt3', respectively. In FIG. 7B, the virtual key stamps of the first through third character function keys 600 through 604 are displayed as 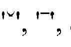 and ',', respectively.

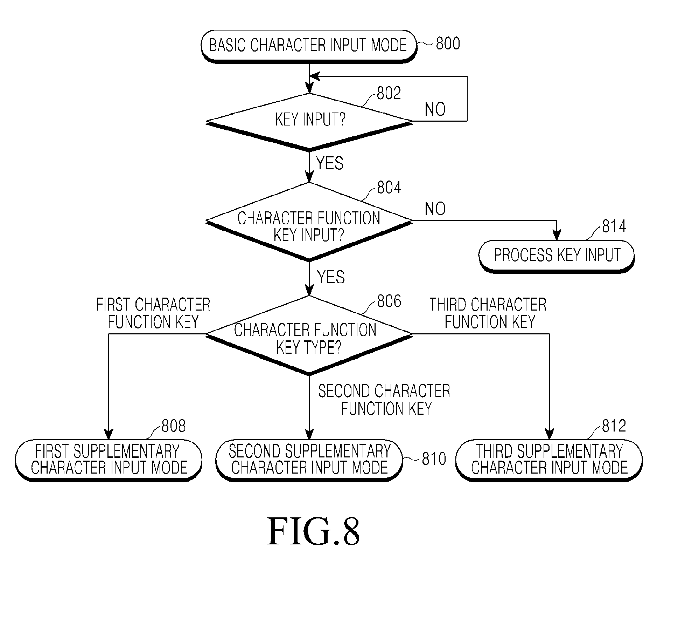

FIG. 8 illustrates a flowchart of a process according to an embodiment of the present disclosure. FIG. 8 illustrates a process performed by the controller 100 of FIG. 1 according to the above-described second embodiment of the present disclosure. Referring to FIG. 8, in the basic character input mode in step 800, the controller 100 displays the virtual keyboard, for example, as illustrated in FIG. 6A on the screen of the touch screen display 104. In this state, the user may input basic characters through basic character keys of the virtual keyboard. When desiring to input a supplementary character, the user inputs a character function key corresponding to a supplementary character set including such a supplementary character among the character function keys 600 through 604.

If there is a key input in step 802, the controller 100 determines whether the key input is a character function key input, that is, an input of one of the first through third character function keys 600 through 604. If the key input is not the character function key input, the controller 100 process the key input in step 814. On the other hand, if the key input is the character function key input, the controller 100 identifies a type of the input character function key in step 806. That is, the controller 100 determines which one of the first through third character function keys 600 through 604 is input.

If the first character function key 600 is input, the controller 100 proceeds to step 808 and switches to the first supplementary character input mode. In the first supplementary character input mode, the controller 100 displays the virtual keyboard, for example, as illustrated in FIG. 6B on the screen of the touch screen display 104. In this case, the user may input a desired supplementary character among the supplementary characters 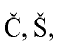 and 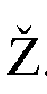 through the supplementary character keys of the virtual keyboard.

If the second character function key 602 is input, the controller 100 proceeds to step 810 and switches to the second supplementary character input mode. In the second supplementary character input mode, the controller 100 displays the virtual keyboard, for example, as illustrated in FIG. 6C on the screen of the touch screen display 104. In this case, the user may input a desired supplementary character among the supplementary characters A̅, E̅, I̅, and U̅ through the supplementary character keys of the virtual keyboard.

If the third character function key 604 is input, the controller 100 proceeds to step 812 and switches to the third supplementary character input mode. In the third supplementary character input mode, the controller 100 displays the virtual keyboard, for example, as illustrated in FIG. 6D on the screen of the touch screen display 104. In this case, the user may input a desired supplementary character among the supplementary characters 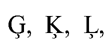 and 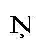 through the supplementary character keys of the virtual keyboard.

In one of the first through third supplementary character input modes, operations of the controller 100 are performed in the same manner as those in the supplementary character input mode described with reference to FIG. 5.

Therefore, if the user inputs a character function key corresponding to a symbol included in supplementary characters of a desired supplementary character set among the first through third character function keys 600 through 604, then the supplementary characters of the supplementary character set including the symbol are displayed on the virtual keyboard in place of corresponding basic characters. Hence, the user may intuitively recognize supplementary character keys for each language and easily input a desired supplementary character key.

Meanwhile, supplementary characters may be classified in a manner which is different from that described above. In particular, for languages other than the Latvian language, the supplementary characters may be classified to be suitable for supplementary characters necessary for a corresponding language.

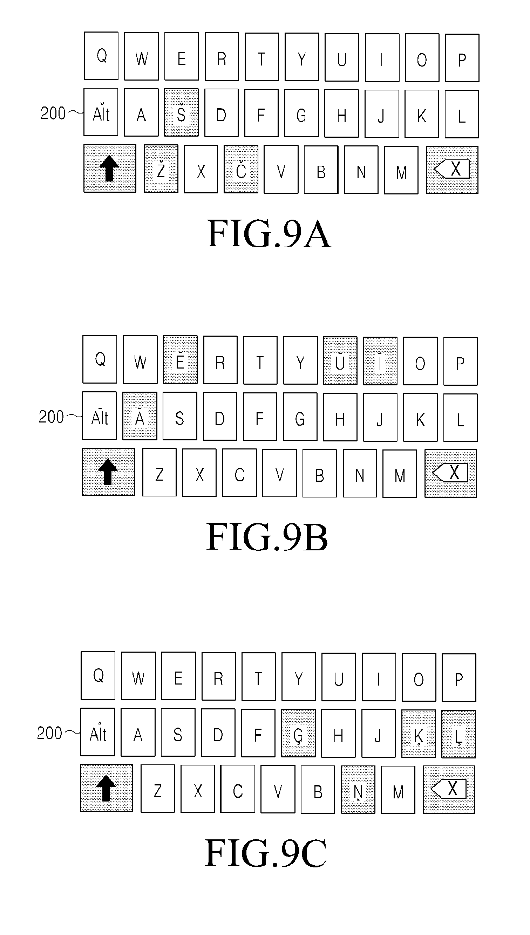

FIGs. 9A through 9C illustrate a virtual keyboard according to another embodiment of the present disclosure. On the virtual keyboard illustrated in FIGs. 9A through 9C, instead of separately disposing the first through third character function keys 600 through 604 like in the second embodiment of the present disclosure, only one character function key 200 corresponding to the above-described character function key 200 of FIG. 2A is disposed. The character function key 200 is used in common for switch from the basic character input mode of FIG. 2A to one of the first through third supplementary character input modes. FIGs. 9A through 9C illustrate a virtual keyboard in which a currently set input language is the Latvian language and which is in the capital letter mode and in the supplementary character input mode.

If the character function key 200 is input in the basic character input mode illustrated in FIG. 2A, the basic character input mode is switched to the first supplementary character input mode illustrated in FIG. 9A. Referring to FIG. 9A, the virtual keyboard includes the character function key 200 switched to the first supplementary character input mode. The character function key 200 in the first supplementary character input mode is set to correspond to the supplementary character set of the supplementary characters 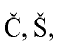 and 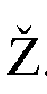 including 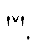

Upon switch to the first supplementary character input mode of FIG. 9A, the basic character keys of the basic characters C, S, and Z illustrated in FIG. 2A corresponding to supplementary characters of a supplementary character set corresponding to the character function key 200 are switched to the supplementary character keys corresponding to the supplementary characters 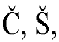 and 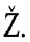 In this state, the shapes of the supplementary character keys and the shape of the character function key 200 are displayed different from those of the other basic character keys. In FIG. 9A, the supplementary character keys are displayed shaded and the virtual key stamp of the character function key 200 is displayed like the character function key 600 of FIG. 6A.

Upon input of the character function key 200 in the first supplementary character input mode illustrated in FIG. 9A, the first supplementary character input mode is switched into the second supplementary character input mode illustrated in FIG. 9B. Referring to FIG. 9B, the virtual keyboard includes the character function key 200 which is switched to the second supplementary character input mode. The character function key 200 in the second supplementary character input mode is set to correspond to the supplementary character set including the supplementary characters A̅, E̅, I̅, and U̅ including '-'.

Upon switch to the second supplementary character input mode of FIG. 9B, the basic character keys of the basic characters A, E, I, and U of FIG. 2A corresponding to the supplementary characters of the supplementary character set corresponding to the character function key 200 are switched to the supplementary character keys corresponding to the supplementary characters A̅, E̅, I̅, and U̅. The shapes of the supplementary character keys and the shape of the character function key 200 are displayed different from those of the other basic character keys. In FIG. 9B, the supplementary character keys are displayed shaded and the virtual key stamp of the character function key 200 is displayed like the character function key 602 of FIG. 6A.

Upon input of the character function key 200 in the second supplementary character input mode illustrated in FIG. 9B, the second supplementary character input mode is switched into the third supplementary character input mode illustrated in FIG. 9C. Referring to FIG. 9C, the virtual keyboard includes the character function key 200 which is switched to the third supplementary character input mode. The character function key 200 in the third supplementary character input mode is set to correspond to the supplementary character set including the supplementary characters 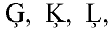 and 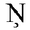 including ','.

Upon switch to the third supplementary character input mode of FIG. 9C, the basic character keys of the basic characters G, K, L, and N of FIG. 2A corresponding to the supplementary characters of the supplementary character set corresponding to the character function key 200 are switched to the supplementary character keys corresponding to the supplementary characters 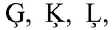 and 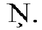 The shapes of the supplementary character keys and the shape of the character function key 200 are displayed different from those of the other basic character keys. In FIG. 9C, the supplementary character keys are displayed shaded and the virtual key stamp of the character function key 200 is displayed like the character function key 604 of FIG. 6A.

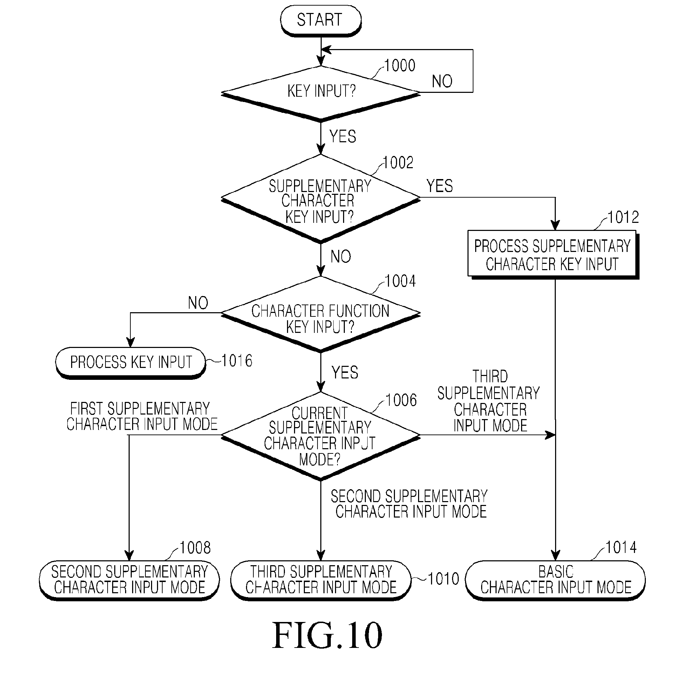

FIG. 10 illustrates a flowchart of a process according to an embodiment of the present disclosure. FIG. 10 illustrates a process performed by the controller 100 of FIG. 1 in one of the first through third supplementary character input modes according to the third embodiment of the present disclosure. Referring to FIG. 10, during execution of one of the first through third supplementary character input modes, if there is a key input in step 1000, the controller 100 determines whether the key input is a supplementary character key input in step 1002. If the key input is the supplementary character key input, the controller 100 processes the supplementary character key input in step 1012 and switches the supplementary character input mode to the basic character input mode in step 1014.

If the key input is not the supplementary character key input in step 1002, the controller 100 determines whether the key input is a character function key input in step 1004. If the key input is not the character function key input, the controller 100 processes the key input in step 1016.

If the character function key 200 is input, the controller 100 proceeds to step 1006 to determine which one of the first through third supplementary character input modes the current supplementary character input mode is. If the current supplementary character input mode is the first supplementary character input mode, the controller 100 switches the first supplementary character input mode to the second supplementary character input mode in step 1008. If the current supplementary character input mode is the second supplementary character input mode, the controller 100 switches the second supplementary character input mode to the third supplementary character input mode in step 1010. If the current supplementary character input mode is the third supplementary character input mode, the controller 100 switches the third supplementary character input mode to the basic character input mode in step 1014. If the current supplementary character input mode is switched to the second supplementary character input mode in step 1008 or is switched to the third supplementary character input mode in step 1010, the controller 100 returns to step 1000.

Therefore, each time the character function key 200 is input, different supplementary character sets corresponding to input languages are sequentially selected one by one and basic character keys corresponding to a selected supplementary character set are switched to supplementary character keys corresponding to the selected supplementary character set. A virtual key stamp indicating the supplementary character set corresponding to the switched supplementary character keys is displayed on the character function key 200. Thus, one character function key may be used in common for switch to the first through third supplementary character input modes.

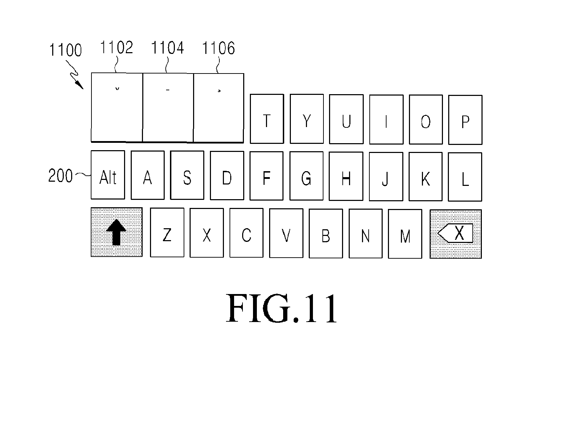

FIG. 11 illustrates a virtual keyboard according to another embodiment of the present disclosure. In FIG. 11, on the virtual keyboard, the character function key 200 of FIG. 2A is used in common to switch the basic character input mode to one of the first through third supplementary character input modes, instead of separately disposing the first through third character function keys 600 through 604 like in the foregoing second embodiment of the present disclosure. FIG. 11 illustrates a virtual keyboard in which a currently set input language is the Latvian language and which is in the capital letter mode and in the supplementary character input mode.

For example, if the character function key 200 is tapped and then held in the basic character input mode of FIG. 2A, virtual key stamps 1102, 1104, and 1106 are displayed in a bubble pop-up 1100. The virtual key stamps 1102 through 1106 correspond to the character function keys 600 through 604 illustrated in FIG. 6A. That is, the virtual key stamp 1102 indicated by '^{v}' corresponds to the character function key 600, the virtual key stamp 1104 indicated by '⁻' corresponds to the character function key 602, and the virtual key stamp 1106 indicated by ',' corresponds to the character function key 604.

When desiring to select one of the virtual key stamps 1102 through 1106, the user touch-moves to the desired virtual key stamp among the virtual key stamps 1102 through 1106 provided in the bubble pop-up 1100 in a hold state and selects a supplementary character set indicated by the virtual key stamp. The touch-movement means that the user moves a touch point while maintaining a touch on the screen of the touch screen display 104.

If one of the virtual key stamps 1102 through 1106 is selected by the user, the basic character input mode is switched to one of the first through third supplementary character input modes illustrated in FIGs. 6B through 6D to correspond to the selected virtual key stamp.

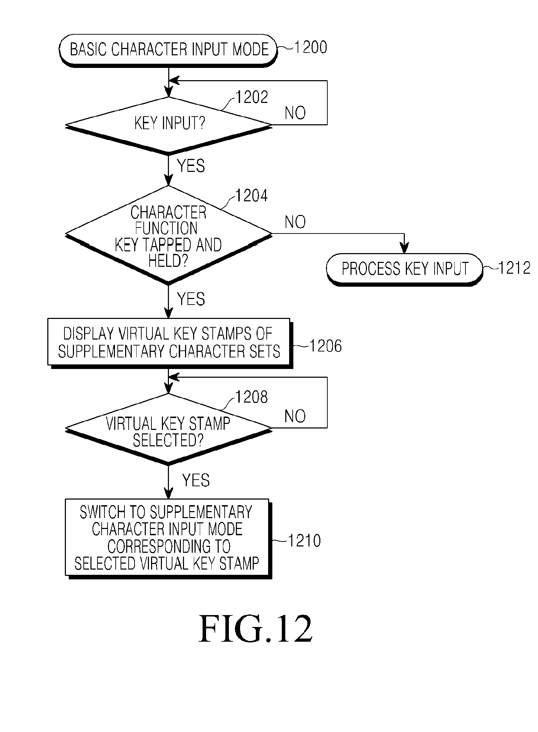

FIG. 12 illustrates a flowchart of a process according to an embodiment of the present disclosure. FIG. 12 illustrates a process performed by the controller 100 of FIG. 1 according to the fourth embodiment of the present disclosure. Referring to FIG. 12, in the basic character input mode of step 1200, the controller 100 displays the virtual keyboard, for example, as illustrated in FIG. 2A, on the screen of the touch screen display 104. In this state, the user may input basic characters through the basic character keys of the virtual keyboard. When desiring to input a supplementary character, the user taps and then holds the character function key 200.

If there is a key input in step 1202, the controller 100 determines whether the key input is tapping and holding of a character function key, that is, whether the character function key 200 is tapped and then held. If the key input is not tapping and holding of the character function key, the controller 100 processes the key input in step 1212.

On the other hand, if the key input is tapping and holding of the character function key, the controller 100 displays the bubble pop-up 1100 as illustrated in FIG. 11 in step 1206 to display the virtual key stamps 1102 through 1106 corresponding to the supplementary character sets. If one of the virtual key stamps 1102 through 1106 is selected in step 1208, the controller 100 switches the basic character input mode to a supplementary character input mode corresponding to the selected virtual key stamp in step 1210. Thus, the basic character input mode is switched to one of the first through third supplementary character input modes illustrated in FIGs. 6B through 6D to correspond to the selected virtual key stamp.

Therefore, if the user taps and then holds the character function key 200, the virtual key stamps 1102 through 1106 corresponding to different supplementary character sets corresponding to an input language are displayed and basic character keys corresponding to a supplementary character set corresponding to one selected from among the virtual key stamp 1102 through 1106 are switched to supplementary character keys corresponding to the supplementary character set. Hence, the user may intuitively use one character function key in common for switch to the first through third supplementary character input modes.

In the foregoing description of the present disclosure, specific embodiments have been described, but various changes may be made without departing from the scope of the present disclosure. For example, the embodiments of the present disclosure may be implemented with hardware, software, or a combination of hardware and software. Such arbitrary software may be stored, whether or not erasable or re-recordable, in a volatile or non-volatile storage such as a Read-Only Memory (ROM), a Random Access Memory (RAM) and an optically or magnetically recordable and machine (e.g., computer)-readable storage medium such as a Compact Disc (CD), a Digital Versatile Disk (DVD), a magnetic disk, or a magnetic tape. Therefore, the present disclosure includes a program including codes for implementing an apparatus or method claimed in an arbitrary claim and a machine-readable storage medium for storing such a program. The program may be electronically transferred through an arbitrary medium such as a communication signal delivered through wired or wireless connection, and the present disclosure properly includes equivalents thereof.

If the virtual keyboard for supplementary character input and the supplementary character inputting method using the virtual keyboard according to the embodiments of the present disclosure are applied to a mobile device, the mobile device may be used for supplementary character input by downloading a program (for example, an application) for supplementary character input from a program providing apparatus (for example, a server) located in a remote place or installing the program and executing the program. That is, if the program for supplementary character input is installed on the mobile device, the program may be executed on the mobile device to provide supplementary character input. The program providing device transmits the program to the mobile device in response to a request for transmission of the program from the mobile device or automatically. The program providing device may additionally perform service subscription determination, user authentication, and payment information checking with respect to the mobile device. The program providing device may include a communication unit for performing wired or wireless communication with the mobile device, a storage medium for storing the program, and a controller for transmitting the program to the mobile device through the communication unit. The storage medium may be located inside or outside the program providing device.

Although the present disclosure has been described with an exemplary embodiment, various changes and modifications may be suggested to one skilled in the art. It is intended that the present disclosure encompass such changes and modifications as fall within the scope of the appended claims.

## Claims

1. A virtual keyboard for supplementary character input, the virtual keyboard comprising:
basic character keys which correspond to basic characters of a basic character set corresponding to a currently set input language, respectively; and
at least one character function key (200), wherein;
in response to the character function key being input, the basic character keys corresponding to the basic characters to which supplementary characters of at least one supplementary character set corresponding to an input language are mapped, respectively, are switched to supplementary character keys of the at least one supplementary character set which is set to correspond to the input character function key,
virtual key stamps of the corresponding basic characters are displayed on the basic character keys, and
virtual key stamps of the corresponding supplementary characters are displayed on the supplementary character keys.

2. The virtual keyboard as claimed in claim 1, wherein supplementary character input apparatus comprises a controller (100) configured to display the virtual keyboard on a screen (104) of a display.

3. The virtual keyboard as claimed in claim 1 or 2, wherein the virtual keyboard further comprises character function keys corresponding to different supplementary character sets corresponding to the input language,
wherein virtual key stamps indicating corresponding supplementary character sets are displayed on the character function keys.

4. The virtual keyboard as claimed in claim 2, wherein the controller is configured to:
sequentially select different supplementary character sets corresponding to the input language one by one each time the character function key is input,
switch basic character keys corresponding to a selected supplementary character set to supplementary character keys corresponding to the selected supplementary character set, and
display a virtual key stamp indicating the supplementary character set corresponding to the switched supplementary character keys on the character function key.

5. The virtual keyboard as claimed in claim 2, wherein:
in response to the character function key being tapped and then held, the controller is configured to display virtual key stamps indicating different supplementary character sets corresponding to the input language,
in response to one of the virtual key stamps indicating the supplementary character sets being selected, the controller is configured to switch basic character keys corresponding to the supplementary character set indicated by the selected virtual key stamp to the corresponding supplementary character keys, and
the controller is configured to display the virtual key stamp indicating the supplementary character set corresponding to the switched supplementary character keys on the character function key.

6. The virtual keyboard as claimed in claim 2, wherein:
the supplementary character sets comprise supplementary characters including a same symbol in respective supplementary character sets,
symbols included in the supplementary characters of the supplementary character sets differ from supplementary character set to supplementary character set, and
in response to the character function key being input, the virtual key stamp displayed on the character function key includes a corresponding symbol.

7. The virtual keyboard as claimed in claim 5, wherein;
the supplementary character sets comprise supplementary characters which include a same symbol in respective supplementary character sets,
symbols included in the supplementary characters of the supplementary character sets differ from supplementary character set to supplementary character set,
the virtual key stamps indicating the supplementary character sets display corresponding symbols, and
in response to one of the virtual key stamps indicating the supplementary character sets being selected, the controller is configured to display the corresponding symbol on the virtual key stamp displayed on the character function key.

8. The virtual keyboard as claimed in claim 2 or 4, wherein in response to the character function key being input, the controller is configured to display at least one shapes among a shape of the character function key and shapes of the supplementary character keys differently from shapes of the basic character keys.

9. The virtual keyboard as claimed in claim 5, wherein in response to one of the virtual key stamps indicating the supplementary character sets being selected, the controller is configured to display at least one shapes among a shape of the character function key and shapes of the supplementary character keys differently from shapes of the basic character keys.

10. The virtual keyboard as claimed in claim 2, 4 or 5, wherein after one of the supplementary character keys is input, the controller is configured to switch the supplementary character keys to the original basic character keys.

11. A method for supplementary character input using a virtual keyboard, the supplementary character input method comprising:
displaying a virtual keyboard comprising basic character keys which correspond to basic characters of a basic character set corresponding to a currently set input language, respectively, and on which virtual key stamps of the corresponding basic characters are displayed, and comprising at least one character function key (400);
switching the basic character keys corresponding to the basic characters to which supplementary characters of at least one supplementary character sets corresponding to the input language are mapped, respectively, into supplementary character keys of the at least one supplementary character set which is set to correspond to the character function key (406), in response to the character function key being input (404); and
displaying virtual key stamps of the corresponding supplementary characters on the supplementary character keys.

12. The method as claimed in claim 11, wherein the displaying of the virtual keyboard comprises displaying character function keys which correspond to different supplementary character sets corresponding to the input language and on which virtual key stamps indicating corresponding supplementary character sets are displayed.

13. The method as claimed in claim 11, further comprising:
sequentially selecting different supplementary character sets corresponding to the input language one by one each time the character function key is input;
switching basic character keys corresponding to a selected supplementary character set to supplementary character keys corresponding to the selected supplementary character set; and
displaying a virtual key stamp indicating the supplementary character set corresponding to the switched supplementary character keys on the character function key.

14. The method as claimed in claim 11, further comprising:
displaying virtual key stamps indicating different supplementary character sets corresponding to the input language in response to the character function key being tapped and then held;
switching basic character keys corresponding to the supplementary character set indicated by the selected virtual key stamp to the corresponding supplementary character keys in response to one of the virtual key stamps indicating the supplementary character sets being selected; and
displaying the virtual key stamp indicating the supplementary character set corresponding to the switched supplementary character keys on the character function key.

15. The method as claimed in claim 12 or 13, wherein;
the supplementary character sets comprise supplementary characters which include the same symbol in respective supplementary character sets,
symbols included in the supplementary characters of the supplementary character sets differ from supplementary character set to supplementary character set, and
the method further comprises in response to the character function key being input, displaying the corresponding symbol on the virtual key stamp displayed on the character function key.

16. The method as claimed in claim 14, wherein;
the supplementary character sets comprise supplementary characters which include a same symbol in respective supplementary character sets,
the symbols included in the supplementary characters of the supplementary character sets differ from supplementary character set to supplementary character set,
the virtual key stamps indicating the supplementary character sets display corresponding symbols, and
the method further comprises displaying the corresponding symbol on the virtual key stamp displayed on the character function key in response to one of the virtual key stamps indicating the supplementary character sets being selected.

17. The supplementary character input method as claimed in one of claims 11 to 13, further comprising displaying at least one shapes among a shape of the character function key and shapes of the supplementary character keys differently from shapes of the basic character keys, in response to the character function key being input.

18. The supplementary character input method as claimed in claim 14, further comprising displaying at least one shapes among a shape of the character function key and shapes of the supplementary character keys differently from shapes of the basic character keys, in response to one of the virtual key stamps indicating the supplementary character sets being selected.

19. The supplementary character input method as claimed in one of claims 11 to 14, further comprising switching the supplementary character keys to the original basic character keys, after one of the supplementary character keys is input.
